# EUROPEAN PATENT SPECIFICATION

(11) **EP 2 503 635 B1**
(45) Date of publication and mention of the grant of the patent: **02.01.2019**
(21) Application number: 10831786.8
(22) Date of filing: 18.11.2010
(51) Int. Cl.: C09J 7/00, H01M 10/052, H01M 10/0585, H01M 10/04

(54) **BIPOLAR ELECTRODE PAIR/SEPARATION MEMBRANE ASSEMBLY, BIPOLAR BATTERY INCLUDING SAME, AND PRODUCTION METHOD THEREOF**
ANORDNUNG AUS EINEM BIPOLAREN ELEKTRODENPAAR UND EINER TRENNMEMBRAN, BIPOLARE BATTERIE DAMIT SOWIE HERSTELLUNGSVERFAHREN DAFÜR
ENSEMBLE PAIRE D'ÉLECTRODES BIPOLAIRES/MEMBRANE DE SÉPARATION, BATTERIE BIPOLAIRE LE COMPRENANT, ET SON PROCÉDÉ DE PRODUCTION

(30) Priority: 18.11.2009 KR 20090111345; 17.11.2010 KR 20100114601
(43) Date of publication of application: 26.09.2012
(73) Proprietor: LG Chem, Ltd., Seoul 07336 (KR)
(72) Inventor: CHUNG, Geun Chang, Daejeon 305-772 (KR); YOUN, Bong Kook, Seoul 150-894 (KR)
(74) Representative: Hoffmann Eitle
(86) International application number: PCT/KR2010/008148
(87) International publication number: WO 2011/062419

(56) References cited:
- EP-A1- 1 841 001
- EP-A1- 2 056 378
- EP-A2- 1 487 034
- JP-A- 2004 039 358
- JP-A- 2004 185 813
- JP-A- 2006 210 002
- KR-A- 20070 085 876
- KR-B1- 100 579 376
- KR-B1- 100 601 550

## Description

### Field of the Invention

The present invention relates to a bipolar electrode/separator assembly, a bipolar battery including the same, and a method of manufacturing the same.

The present invention is characterized in that a thin metal foil type collector is used, instead of separately inserting a separation plate, in order to realize high energy density, and adhesive films are provided on at least two of four uncoated edge surfaces of the collector on which electrode layers are absent in order to prevent the leakage of an electrolyte, and a separator is then stacked thereon, so that the collector and the separator are directly bonded by the adhesive films, thereby sealing a bipolar electrode.

### Related Art

A vigorous attempt is being made to develop a battery applicable to a field that requires high output and high energy density, such as a car. In terms of the commercialization thereof, a lithium ion secondary battery is capable of realizing sufficiently high output and high energy density. Notably, with regard to power supply for driving various car motors, a bipolar battery has come into prominence, in which individual bipolar electrodes each formed of a positive electrode-negative electrode pair are connected in series to thereby achieve high energy density.

A bipolar battery has a cell type structure which is advantageous in that high voltage can be obtained due to a plurality of unit electrode stacks connected in series within the battery. However, this series connection is effective only when the unit electrode stacks are completely electrochemically separated from each other. Therefore, the flow of an electrolyte between the unit electrode stacks needs to be completely blocked for the complete electrochemical separation between the plurality of unit electrode stacks.

As a method for completely blocking the flow of an electrolyte between bipolar unit electrode stacks, a technique of using a high molecular solid electrolyte, containing no liquid, as an electrolytic layer has been proposed (Japanese Patent Laid-Open Publication No. 2000-100471). However, the high molecular solid electrolyte has low usability due to its lower ion conductivity than that of a high molecular gel electrolyte, and its low power or energy density in a general operational environment. Furthermore, all the processes of preparing high molecular separators having ion conductivity and of inserting and assembling the high molecular separator into a bipolar stack need to be carried out under dry conditions in which moisture is completely removed, so as to prevent the property degradation of the high molecular separator having a very high hygroscopic property and to prevent gas generation caused by the decomposition of water within a battery. This may complicate processes and incur high costs in practical terms.

Meanwhile, techniques regarding a bipolar battery including a high molecular gel electrolyte including an electrolytic liquid in an electrolytic layer have been developed (Japanese Patent Laid-Open Publication No. 2004-75455 and No. Hei11-204136). However, such a bipolar battery has a limitation in that the electrolytic liquid within the electrolytic layer may leak out and come into contact with an electrode or an electrolyte of another individual electrode pair, causing short-circuits. To address this limitation, Korean Patent Laid-Open Publication No. 10-2007-0085876 discloses a bipolar battery including a separator holding an electrolytic layer, and a shaped sealing resin arranged in the outer edge of an electrolyte-holding portion of the separator.

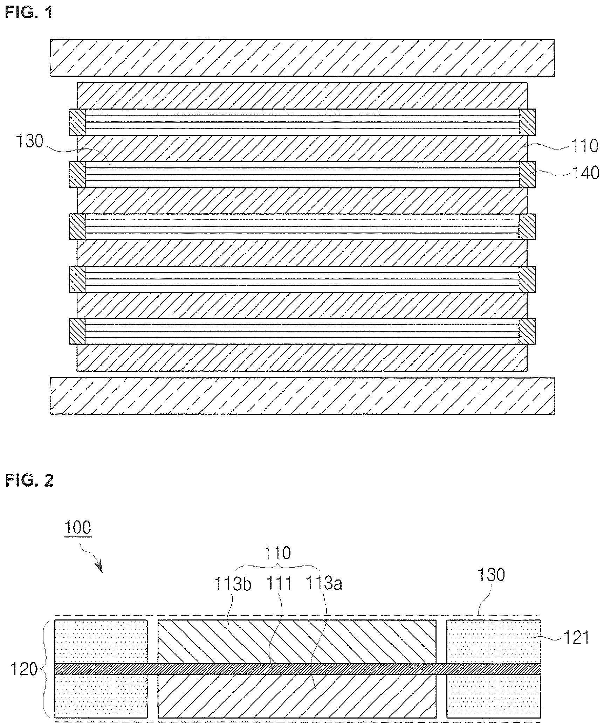

FIG. 1 illustrates the structure of an existing bipolar battery as described above. Referring to FIG. 1, a plurality of bipolar electrodes 110, in each of which a negative electrode and a positive electrode are respectively formed on both sides of a collector, are electrically connected, and sealing portions 140 are provided to seal both edges of separators 130 containing an electrolytic liquid and interposed between the bipolar electrodes.

In such a bipolar battery, it is important to effectively form sealing portions so as to prevent the flow of an electrolyte with which separators are impregnated and block the movement of the electrolyte between individual electrode stacks. In general, such sealing portions are formed through a very complicated process of applying/injecting a polymer resin to the periphery of a separator and performing compression or applying heat thereon to thereby seal the separator.

However, due to the low mechanical strength and adhesiveness of the separator holding the sealing resin, inconvenience in handling may occur during the process of applying/injecting the sealing resin evenly to the periphery of the porous separator typically having a thickness of 30 microns or less and the process of positioning and assembling the separator, processed as above, between a negative electrode and a positive electrode of an individual stack. Here, examples of the inconvenience in handling may include the attachment of separators overlapping in part, the wrinkling in part of a separator, the dislocation of a separator and the attachment of a separator to another material used together in the processes. Furthermore, since the sealing resin having properties of blocking the flow of an electrolytic liquid makes the injection of the electrolyte difficult after the assembly, the separator positioned at the inside of the sealing resin needs to be impregnated with the electrolyte before the separator is integrated with an electrode surface. This causes operational limitations associated with water absorption, similar to the case in which a high molecular electrolyte is used according to Japanese Patent Laid-Open Publication 2000-100471, and besides, brings about even more serious limitations in terms of the handling of the separator impregnated with the electrolyte. In detail, if the separator impregnated with the electrolyte comes into contact with the surface of assembly equipment such as handling jigs, a portion of the electrolyte smears out of the separator to contaminate such surface even after the gelation and curing, thereby requiring a repetitive washing process.

For the normal operation of an individual electrode stack, the electrolyte needs to be used not only in the separator but also in electrode plates of the electrode stack. In this case, a sufficient amount of electrolyte is required to fill the pores of the electrode plates of the electrode stack. In order to fill the pores of the electrode plates with only an electrolytic liquid, the separator needs to hold an excessive amount of liquid electrolyte. However, making the porous separator hold an excessive amount of liquid electrolyte is technically very difficult to achieve. Further, a separator holding an excessive amount of electrolyte merely serves to exacerbate the aforementioned limitations regarding the assembly process.

In a bipolar battery, each of pairs of positive and negative electrodes is formed by placing a positive electrode on one side of a collector and placing a negative electrode on the other side thereof. Document EP2056378 discloses an example of a bipolar battery. Since electrode stacks need to be separated, a separation plate is typically interposed between each two positive electrode-negative electrode pairs to thereby separate the electrode stacks. However, in actuality, a lithium ion battery employs a thin electrode plate and an electrolyte having relatively low ion conductivity. For this reason, if a separation plate has a thickness greater than that of a metal foil used as a collector, significant spatial loss occurs, rapidly reducing energy storage density.

### Detailed Description of the invention

### Technical Problem

The present invention is defined by the features of claims 1, 7 and 8, and relates to a bipolar electrode/separator assembly, and a method of manufacturing it.

An aspect of the present invention provides a collector and a separator thermally and directly bonded together by using adhesive films applied to electrode-uncoated surfaces of the collector in a bipolar electrode, in order to simplify and facilitate the related art sealing process, which causes inconvenience in the process of manufacturing a bipolar battery, such as sealing both edges of a separator using a sealing resin and performing individual sealing thereupon.

Another aspect of the present invention provides a method of forming an electrolytic layer by impregnating a stack in which separators are assembled with an electrolytic liquid and subjecting the resultant stack to a cross-linking reaction, in order to avoid difficulties in injecting an electrolytic liquid and inconvenience caused in handling a separator/polymer separator impregnated with an electrolyte, and to permit the supply of a sufficient amount of electrolytic liquid to the pores of an electrode plate and prevent problems caused by the flow of the electrolyte within a bipolar batter after a curing process.

Another aspect of the present invention provides a collector acting as a separation plate in a bipolar battery using the above sealing process and an electrolyte, without separately inserting a separation plate, the collector being formed of a thin metal foil, in order to realize a high energy density. That is, an object of the present invention is to accomplish the realization of high energy density, effective and reliable sealing, ease of sealing process, and convenience in manufacturing and maintaining a battery.

### Technical Solution

According to an aspect of the present invention, a bipolar electrode/separator assembly includes: a bipolar electrode-adhesive film assembly including a bipolar electrode holding active materials, capable of having different polarities, on central portions of top and bottom sides of a collector, respectively, and adhesive films on one or both of top and bottom sides of the collector with respect to at least two of four uncoated edge surfaces of the collector on which electrode layers are not coated in the bipolar electrode; and a separator stacked on one or both of top and bottom surfaces of the bipolar electrode-adhesive film assembly, said separator being unimpregnated non-electrolyte separator which has properties of being mechanically wetted by an electrolyte when impregnated therewith, and wherein the collector and the separator are directly bonded by the adhesive films to thereby seal the bipolar electrode.

The adhesive films may include an ethyl vinyl acetate (EVA) film or a modified polyethylene (PE) polymer.

The collector may be a metal foil having a thickness ranging from 10 microns to 20 microns.

According to another aspect of the present invention, a bipolar battery comprises of the bipolar electrode/separator assembly.

The bipolar electrode/separator assembly may be provided in two or more bipolar electrode/separator assemblies that are stacked such that electrode layers thereof having opposite polarities face each other.

An electrolyte of the bipolar battery may be in a gel state.

The electrolyte may be formed into the gel state by a thermal cross-linking reaction.

According to an aspect of the present invention, a method of manufacturing a bipolar electrode/separator assembly includes:
(a) applying a positive electrode active material and a negative electrode active material to central portions of top and bottom sides of a collector so as to be spaced apart by a predetermined distance from edges of the collector, and performing drying thereupon, whereby a positive electrode and a negative electrode are respectively arranged on both sides of the collector, thereby forming a bipolar electrode;
(b) applying adhesive films, having no adhesiveness at room temperatures, on both the top and bottom surfaces of the collector with respect to at least two sides, including opposing sides, among surfaces of four uncoated sides of the collector on which electrode layers are not coated in the bipolar electrode;
(c) and stacking a separator on one or both of the top and bottom surfaces of the bipolar electrode and applying heat to thereby be adhesively sealed by the adhesive film, said separator being an unimpregnated non-electrolyte separator which has properties of being mechanically wetted by an electrolyte when impregnated therewith; and whereby the collector and the separator are integrated.

According to an aspect of the present invention, a method of manufacturing a bipolar electrode/separator assembly, the method includes: intermittently applying a positive electrode active material and a negative electrode active material, in the form of rectangular electrode patterns, to both top and bottom surfaces of a continuous collector, and performing drying thereupon, whereby positive electrodes are arranged on one surface of the continuous collector and negative electrodes are arranged on the other surface of the continuous collector, thereby forming a plurality of bipolar electrodes; consecutively applying adhesive films, having no adhesiveness at room temperatures, to both the top and bottom surfaces of the continuous collector with respect to at least two sides, including opposing sides, among surfaces of four uncoated sides of the continuous collector positioned at the four outer edges of the applied electrode patterns of each of the plurality of bipolar electrodes, thereby forming a plurality of bipolar electrode-adhesive film assemblies; and stacking a separator on either one of the top or bottom surfaces or both surfaces of the plurality of bipolar electrode-adhesive assemblies and applying heat thereto to be adhesively sealed by the adhesive films, whereby the continuous collector and the separator are integrated, and performing cutting thereupon into unit bipolar electrode/separator assemblies.

According to another aspect of the present invention, a method of manufacturing a bipolar battery, the method includes: (a) stacking the bipolar electrode/separator assembly of claim 1 on another bipolar electrode/separator assembly while alternating with the bipolar electrode-adhesive film assembly of claim 1 there between to thereby form a stack including at least two bipolar electrode/separator assemblies; (b) integrating the stack through compression under heating; (c) inserting the integrated stack into a battery package and injecting an electrolytic liquid thereinto to thereby impregnate the separator of claim 1 with the electrolytic liquid; (d) gelating the electrolytic liquid with which the separator has been impregnated, through a thermal cross-linking reaction to thereby form an electrolytic layer; and (e) removing a residue of the electrolytic liquid.

The compression under heating may be performed by putting the stack into a chamber having a temperature raised to a temperature of 80 °C to 150°C and applying pressure thereto.

### Effects of the Invention

Adhesive films are formed on at least two of four electrode-uncoated edge surfaces of a collector through a consecutive process, so that the collector and a separator directly form adhesive sealing therebetween. Accordingly, effective sealing is accomplished in each electrode pair of a bipolar battery, and the sealing process can be carried out in a simple and easy manner. Furthermore, a bipolar battery permitting easy removal of gases generated in an activation process or in use, in comparison with the related art, can be provided.

Furthermore, a stack, after being completely assembled, is impregnated with an electrolytic liquid, and is then subjected to cross-linking. This easily permits even distribution of the electrolyte in the entire stack. Since a separator is impregnated with the electrolytic liquid after the stack assembly, inconvenience in an assembly process and limitations caused by water absorption can be obviated.

Also, the electrolyte, after the impregnation, is gelated through the cross-linking, so that the flow of the electrolyte within a bipolar battery can be prevented.

Furthermore, a thin metal foil is used as a collector in the exemplary embodiments of the present invention, and thus, a bipolar battery having a high energy density can be provided.

### Brief Description of the Drawings

The above and other objects and features of the present invention will become apparent from the following description of preferred embodiments given in conjunction with the accompanying drawings, in which:
FIG. 1 is a view illustrating a structure of a related art bipolar battery;
FIG. 2 is a view illustrating a structure of a bipolar electrode/separator assembly according to an exemplary embodiment of the present invention;
FIG. 3 is a view illustrating a structure of a stack according to an exemplary embodiment of the present invention;
Fig. 4 is a view illustrating a structure of a stack according to another exemplary embodiment of the present invention; and

### Best Mode of the Invention

Exemplary embodiments of the present invention will now be described in detail with reference to the accompanying drawings. These embodiments are provided so that this disclosure will be thorough and complete, and will fully convey the scope of the invention to those skilled in the art

Referring to FIG. 2, a bipolar electrode/separator assembly 100 according to an exemplary embodiment of the present invention includes a bipolar electrode-adhesive film assembly 120 including a bipolar electrode 110 and adhesive films 121; and a separator 130 stacked on one or both of the top and bottom sides of the bipolar electrode-adhesive film assembly 120. Here, the bipolar electrode 110 includes electrode layers 113a and 113b disposed on the central portions of both top and bottom surfaces of a collector 111 and holding active materials capable of having different polarities, respectively, and the adhesive films 121 are disposed on both the top and bottom surfaces of the collector 111 with respect to at least two of four uncoated edge surfaces of the collector 111 on which the electrode layers 113a and 113b of the bipolar electrode 110 are not present (hereinafter, also referred to as electrode-uncoated edge surfaces). The bipolar electrode/separator assembly 100 is characterized in that the collector 111 and the separator 130 are bonded directly by the adhesive films 121 to thereby seal the bipolar electrode 110.

As for the bipolar electrode 110, the electrode layers 113a and 113b, namely, positive and negative electrodes 113a and 113b, are formed on the central portions of both top and bottom sides of the collector 111 formed of a thin metal foil. In the present invention, the bipolar electrode-adhesive film assembly 120 refers to a structure obtained by attaching the adhesive films 121 to both the top and bottom surfaces within at least two of four uncoated edge surfaces of the collector 111 on which the electrode layers 113a and 113b are not formed in the bipolar electrode 110. Also, the bipolar electrode/separator assembly 110 according to the present invention refers to a structure obtained by stacking the separator 130 on one or both of the top and bottom sides of the bipolar electrode-adhesive film assembly 120. Herein, the adhesive films 121 each have one side bonded with the uncoated surface of the bipolar electrode 110 and the other side bonded with the separator 130.

In a case in which two bipolar electrodes 110 face each other while interposing the separator 130 there between, the collector 111 serves to physically block the flow of an electrolyte so that an electrolytic liquid, contained in a single effective electrode stack consisting of a negative electrode surface of one bipolar electrode 110, the separator 130 and a positive electrode surface of another bipolar electrode 110 facing the one bipolar electrode 110, is prevented from flowing into an adjacent electrode stack. However, considering that it is impossible for a bipolar lithium ion battery to normally operate if the separator 130 comes into contact with another separator 130, forming the next stack, across the current collector 111 or if the electrolytic liquid surrounds the collector 11 and thus connects the top and bottom sides of the collector 111 together, the separators 130 or the electrolyte need to be thoroughly prevented from flowing or being connected across the collector 111, electrochemically separating the electrode stacks from each other. This is a technical difficulty that needs to be solved for the completion of a high energy density bipolar lithium ion battery.

To address the above difficulty, according to the present invention, the adhesive films 121 are provided on both top and bottom surfaces of at least two of four uncoated edge surfaces of the collector 111 to which the electrode layers 113a and 113b are not applied, and the adhesive films 121 allow the collector 111 and the separator 130 to be directly bonded to thereby seal the bipolar electrode 110. That is, the present invention provides the bipolar electrode/separator assembly 100 in which one or both of the top and bottom sides of the bipolar electrode 110 is sealed and bonded with the separator 130. Since adhesive sealing is formed along at least two of four edge surfaces outside active electrode surfaces, and the collector 111 interferes between the separators 130 in the rest of the edge surfaces, the electrolyte is prevented from flowing between electrode stacks. Preferably, the adhesive films 121 may be applied to both top and bottom surfaces of at least two sides, including opposing sides, among the four uncoated edge surfaces of the collector 111, to be spaced apart from the sides of the electrode layers 113a and 113b by a predetermined distance.

The collector 111 may utilize a thin film formed of aluminum, copper, titanium, nickel, stainless steel or an alloy thereof. Alternatively, the collector 111 may utilize a clad metal foil in which two different kinds of metals described above are bonded together, according to the operational voltage ranges of the positive electrode 113a and the negative electrode 113b. Furthermore, in order to increase an energy density per volume, a thin metal film (preferably, an aluminum film) having a thickness of 20 microns or less may be used. Specifically, a metal film having a thickness ranging from 10 microns to 20 microns may be used as the collector 111.

The positive electrode active material for the positive electrode 113a may utilize a complex oxide of a transition metal and lithium, such as a LiCo-based complex oxide, a LiNi-based complex oxide, a LiMn-based complex oxide, or a LiFe-based complex oxide. Also, a sulfate compound or a phosphate compound of a transition metal and lithium, such as LiFePO₄; a sulfide or a transition metal oxide such as V₂O₅, MnO₂, TiS₂, MOS₂ or MoO₃; or PbO₂, AgO, NiOOH or the like may be used. The positive electrode 113a may further include a binder and a conducting agent to improve electron conductivity, other than the positive electrode active material.

The negative electrode active material for the negative electrode 113b may utilize carbon, metal oxide, lithium-metal complex oxide or the like. In particular, a lithium-titanate complex oxide may be used as a lithium-transition metal complex oxide. The negative electrode 113b may further include a binder and a conducting agent for enhancing electron conductivity, other than the negative electrode active material.

The adhesive film 121 utilizes a sealing material having no adhesiveness at a room temperature while exhibiting its adhesiveness at a high temperature. Adhesive portions may be formed on both sides of the adhesive film 121 so as to be bonded with both the collector 111 and the separator 130. Furthermore, the adhesive films 121 need to be formed of an insulating material, and may utilize a material containing an EVA film, a modified PE polymer or the like.

The separator 130 is provided between bipolar electrodes 110 to thereby prevent a short-circuit. The separator 130 may utilize a porous film or nonwoven fabric such as a poly olefin film or nonwoven fabric, a cellulose nonwoven fabric, a polyethylene terephthalate (PET) or the like. The separator 130 has properties of being mechanically wetted by the electrolyte impregnated therewith.

The bipolar battery according to the present invention includes the above-described bipolar electrode/separator assembly 100.

in the bipolar battery, two or more bipolar electrode-separator assemblies 100 may be stacked such that electrode layers 113a and 113b having opposite polarities face each other. Furthermore, such bipolar batteries may be connected in series, in parallel or in both series and parallel so as to accomplish desired capacity and voltage, whereby a bipolar battery pack or module may be formed. The above electrical connection between the bipolar batteries may be achieved by using an appropriate connection member such as a collector terminal or a bus bar.

Here, as an electrolyte of the bipolar battery, an electrolyte gelated through a thermal cross-linking reaction may be used.

A method of manufacturing a bipolar electrode/separator assembly 100 according to the present invention includes: (a) applying a positive electrode active material for a positive electrode 113a and a negative electrode active material for a negative electrode 113b to the central portions of the top and bottom surfaces of a collector 111 so as to be spaced apart by a predetermined distance from the edges of the collector 111, and performing drying thereupon, so that the positive electrode 113a and the negative electrode 113b are respectively arranged on both sides of the collector 111 to thereby form a bipolar electrode 110; (b) applying an adhesive film 121, having no adhesiveness at room temperatures, on both the top and bottom surfaces of the collector 111 with respect to at least two of four uncoated edge surfaces of the collector 111 on which the electrode layers 113a and 113b are not coated in the bipolar electrode 110; and (c) stacking a separator 130 on one or both of the top and bottom sides of the bipolar electrode 110 and applying heat to thereby be adhesively sealed by the adhesive film 121, whereby the collector 111 and the separator 130 are integrated.

Also, a plurality of bipolar electrode-separator assemblies 100 may be manufactured in a simple and easy manner by performing the following operations of: (a) intermittently applying a positive electrode active material and a negative electrode active material, in the form of rectangular electrode patterns, to both the top and bottom surfaces of a continuous collector 111, and performing drying thereupon, so that positive electrodes 113a and negative electrodes 113b are arranged on both surfaces of the continuous collector 111 to thereby form a plurality of bipolar electrodes 110; (b) consecutively applying adhesive films 121, having no adhesiveness at room temperatures, to both the top and bottom surfaces of the continuous collector 111 with respect to at least two sides, including opposing sides, among uncoated edge surfaces positioned at the four outer edges of the applied electrode patterns of each of the plurality of bipolar electrodes 110, thereby forming a plurality of bipolar electrode-adhesive film assemblies 120; and (c) stacking a separator 130 on the respective top sides of the plurality of bipolar electrode-adhesive assemblies 120, applying heat thereto to be adhesively sealed by the adhesive films 121, whereby the collector 111 and the separator 130 are integrated, and performing cutting thereupon into unit bipolar electrode/separator assemblies 100.

in a case in which, after a bipolar electrode is manufactured, an electrolytic layer is formed on one or both of the surfaces of the bipolar electrode and a sealing material or the like is then disposed thereon, the associated processes are very complicated, inconvenient, time-consuming and costly processes. However, according to the present invention, a plurality of bipolar electrode-adhesive film assemblies are formed by applying active materials to a continuous collector and consecutively applying adhesive films, having no adhesiveness at room temperatures, thereto. Thus, the bipolar electrode/separator assemblies can be manufactured in a very simple and fast manner, and permit easy removal of gases generated while a battery is being activated or used.

Hereinafter, the manufacturing process thereof will be described in detail.

First, slurry containing the positive electrode active material for the positive electrodes 113a and slurry containing the negative electrode active material for the negative electrodes 113b are intermittently applied to the top and bottom surfaces of the continuous collector (e.g., a large collector separable into unit collectors in a subsequent process). Here, the intermittent application refers to the application of the active materials to a plurality of spots on the large collector at predetermined intervals. Thereafter, the resultant structure is dried by heat, thereby rapidly forming the plurality of bipolar electrodes 110.

Thereafter, the adhesive films 121 having adhesiveness only at high temperatures, not at room temperatures, are consecutively applied to both the top and bottom surfaces of at least two sides of the bipolar electrode, including opposing sides, among four uncoated edge surfaces of the collector 111 positioned at the four outer edges of the applied electrode patterns of each of the plurality of bipolar electrodes 110, thereby forming the plurality of bipolar electrode-adhesive film assemblies 120. That is, a single application operation is consecutively performed such that the active films 121 for each of the bipolar electrode 110 are easily applied to the electrode-uncoated edge surfaces, of the large collector on which the positive electrodes 113a or the negative electrodes 113b are arranged, in a width direction or in width and length directions. Accordingly, adhesive sealing is formed along at least two of the four uncoated edge surfaces outside electrode active surfaces.

The adhesive films 121 may be spaced apart from the edges of the electrode layers 113a and 113b at a predetermined distance, and the adhesive films 121 may be formed on both the top and bottom surfaces of the collector 111.

Subsequently, the separator 130 is stacked on one or both of the top and bottom surfaces of each of the plurality of bipolar electrode-adhesive film assemblies 120, and heat is applied thereto to form adhesive sealing with the adhesive films 121 at both edges, thereby integrating the collector 111 and the separator 130.

Finally, the integrated collector 111 and the separator 130 are cut according to desired standards, thereby obtaining the plurality of unit bipolar electrode/separator assemblies 100.

One side or both sides of the bipolar electrode/separator assemblies 100 manufactured in the above manner are covered with the separator 130, and the collector 111 and the separator 130 are directly bonded with each other by the adhesive films 121, thereby sealing the periphery of the electrode active surfaces. A bipolar battery may be manufactured by connecting two or more of the bipolar electrode/separator assemblies 100 in series to accomplish a desired voltage.

A method of manufacturing a bipolar battery according to the present invention includes (a) stacking the bipolar electrode/separator assembly 100 on another bipolar electrode/separator assembly 100, manufactured through the above manufacturing process while interposing the bipolar electrode-adhesive film assembly 120 therebetween to thereby form a stack 200 including at two bipolar electrode/separator assemblies 100; (b) integrating the stack through compression under heating; (c) inserting the integrated stack 200 into a battery package and injecting an electrolytic liquid thereinto to thereby impregnate the separator 130 with the electrolytic liquid; (d) gelating the electrolytic liquid with which the separator 130 has been impregnated, through a thermal cross-linking reaction to thereby form an electrolytic layer; and (e) removing a residue of the electrolyte.

As for the bipolar electrode/separator assembly 100 according to the present invention, at least two of the electrode-uncoated edge surfaces of the collector 111 are adhesively sealed by the adhesive films 121. When a bipolar battery is manufactured by stacking the plurality of bipolar electrode/separator assemblies 100 or alternatively stacking the bipolar electrode/separator assemblies 100 and the bipolar electrode-adhesive film assemblies 120, it is separated by the separators 130 so that electrode pairs can be insulated.

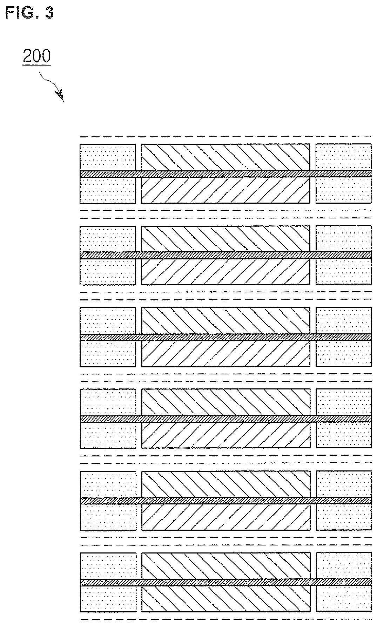

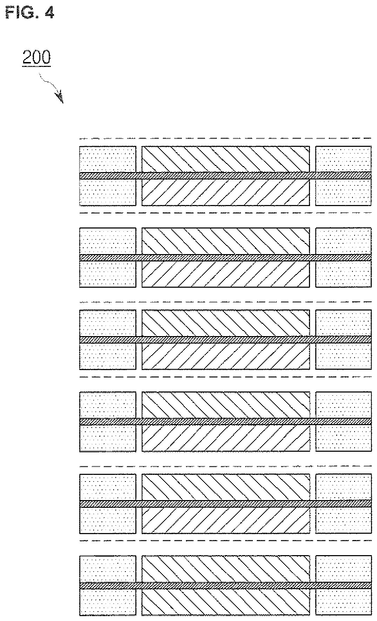

As described above, the bipolar electrode/separator assemblies 100 may each be in a state in which both the top and bottom surfaces of the bipolar electrode-adhesive film assembly 120 are covered with the separators 130 or in a state in which only one of the top and bottom surfaces of the bipolar electrode-adhesive film assembly 120 are covered with the separator 130. The bipolar electrode/separator assemblies 100 of the former state may be stacked to thereby form a bipolar battery having a double separator structure in which the bipolar electrode 100, the separator 130 and the bipolar electrode 100 are sequentially stacked as shown in FIG. 3. The bipolar electrode/adhesive film, assemblies of the latter state may be stacked while interposing one separator 130 between each two bipolar electrode/adhesive film assemblies to thereby form a bipolar battery having a single separator structure in which the bipolar electrode 110, the separator 130, the bipolar electrode 110 and the separator are sequentially stacked as shown in FIG. 4. Alternatively, the bipolar electrode/separator assemblies 110 of the former state may be stacked while interposing the bipolar electrode-adhesive film assemblies 120 including only the adhesive films 130 attached thereto, and the resultant stack may be subjected to compression under heating, to thereby form a bipolar battery of a single separator structure, which is substantially the same as the single separator structure of FIG. 4 obtained by using the bipolar electrode/separator assemblies 100 of the latter state. Consequently, various types of bipolar batteries may be easily manufactured as occasion arises.

During the compression under heating, heat is applied to a stack 200 for sealing so that an electrolytic liquid is prevented from passing through the portions to which the adhesive films 121 are applied. In detail, the stack 200 of the plurality of bipolar electrode/separator assemblies 100 or the bipolar electrode-adhesive assemblies is put into a chamber having a temperature raised to a predetermined temperature, and is then pressurized. In the case of the adhesive films 121 having adhesiveness at high temperatures, the compression under heating may be completed at a temperature ranging from approximately 80°C to 150°C depending on the physical properties of the adhesive films 121.

Thereafter, the integrated stack 200 is inserted into a battery package, an electrolyte is injected thereto and then subjected to a cross-linking reaction in a state where the separators 130 are impregnated with the electrolyte. According to the present invention, both edges of the separators 130 may not be blocked unlike in the case of the related art, and the injection/impregnation of the electrolyte is carried out after the stack 200 is completely assembled. Thus, as described above, the re-injection of the electrolyte may be facilitated, a sufficient amount of electrolyte may be supplied to the pores of electrode plates, and the electrolyte may be dispersed evenly throughout the entire stack 200. The electrolyte, after being injected, is stored such that the separator 130 is sufficiently impregnated with the separators 130. Thereafter, a cross-linking reaction is induced by raising a temperature so as to allow an initiator within the electrolyte to initiate a polymerization reaction. The cross-linking reaction gelates the electrolyte and thus a nonfluid electrolytic layer is formed, thereby preventing the flow of the electrolyte. Finally, the residue of the electrolyte which is not gelated is removed, and this removal may be performed by using vacuum.

According to the present invention, the electrolyte contains, as base materials, an organic carbonate such as an ethylene carbonate, a propylene carbonate, a diethyl carbonate, an ethyl methyl carbonate or a dimethyl carbonate, aprotic organic solvents such as gamma-butyrolactone, methyl propionate, ethyl propionate, or metal acetate, and an organic electrolytic liquid obtained by melting LiBF₄, LiPF₄, LiN(SO₂CF₃)₂, LiN(SO₂C₂F₅)₂ or the like to provide ion conductivity to other base materials. The electrolyte also contains a heat-curable monomer and an initiator for initiating the heat-curing thereof. Such a mixture used as the electrolyte according to the present invention is subjected to crosslinking by the heat curing to thereby have a high mechanical strength and a superior capability of keeping the electrolyte therein and thus preventing the flow of the electrolyte.

The bipolar battery manufactured in the above manner may be activated by being charged and discharged a plurality of times.

Hereinafter, the present invention will be described in detail; however, it is not limited to the description.

### Embodiment

A slurry for the positive electrode 113a, containing lithium manganese oxide (LMO) as a positive electrode active material for the positive electrode 113a, carbon black as a conducting agent, and PVDF as a binder, is applied on one side of an aluminum foil serving as the collector 111, and a slurry for the negative electrode 113b, containing a lithium titanium oxide (LTO), carbon black as a conducting agent, PVDF as a binder, is applied on the other side of the aluminum foil. Thereafter, the resultant structure is dried by hot air at a temperature of 150°C for two minutes.

Subsequently, a modified PE polymer is applied as the adhesive film 121 to both the top and bottom surfaces of the two opposing sides of four electrode-uncoated edge surfaces of the collector 111 to be spaced apart from the edges of the electrode layers 113a and 113b at a predetermined distance.

Thereafter, a porous nonwoven fabric of a PET material as the separator 130 is stacked on both the top and bottom sides of the bipolar electrode-adhesive film assembly 120 and is adhesively bonded with the collector 111 by the adhesive film to thereby be integrated. In such a manner, the bipolar electrode/separator assembly 100 is manufactured.

Then, two bipolar electrode/separator assembly 100 manufactured in the above manner are used together with electrodes disposed on top and bottom surfaces, so as to form a bipolar stack 200 having a triple-layered series connection structure in which a negative electrode 113b with adhesive films disposed on two long sides of the uncoated portion of the coated surface , a separator 130, a bipolar electrode-adhesive film assembly 120, and a bipolar electrode/separator assembly 100 and a positive electrode 113a with adhesive films disposed on two long sides of the uncoated portion of the coated surface are sequentially assembled. Then, the stack 200 is put into a chamber having a temperature raised to 100°C and pressurized, thereby being thermally compressed and integrated.

Thereafter, the integrated stack 200 is inserted into a battery package, an electrolytic liquid containing an acrylate and peroxide-based initiator is injected therein, and the resultant structure is stored at room temperature for 12 hours so that the separator 130 can be sufficiently impregnated with the electrolytic liquid. Then, the cross-linking reaction of the electrolyte is induced by raising the temperature to 85 °C. The electrolyte remaining after the completion of the cross-linking reaction is removed by applying vacuum.

Finally, the bipolar battery manufactured in the above manner according to the present invention is activated by performing two charge/discharge cycles within a range of 8 V to 6 V.

## Claims

1. A bipolar electrode/separator assembly (100), comprising:
a) a bipolar electrode-adhesive film assembly (120) including
a1) a bipolar electrode (110, 113a, 113b) holding active materials, capable of having different polarities, on central portions of top and bottom sides of a collector (111), respectively, and
a2) adhesive films (121) on both top and bottom surfaces of the collector (111) with respect to at least two of four uncoated edge sides of the collector (111) on which electrode layers (113a, 113b) are not coated in the bipolar electrode; and
b) a separator (130) stacked on one or both of top and bottom surfaces of the bipolar electrode-adhesive film assembly (120), said separator (130) being a unimpregnated non-electrolyte separator which has properties of being mechanically wetted by an electrolyte when impregnated therewith; and
c) wherein the collector (111) and the separator (130) are directly bonded by the adhesive films (121) to thereby seal the bipolar electrode.

2. The bipolar electrode/separator assembly (100) of claim 1, wherein the adhesive films (121) include an ethyl vinyl acetate (EVA) film or a modified polyethylene (PE) polymer.

3. The bipolar electrode/separator assembly (100) of claim 1, wherein the collector (111) is a metal foil having a thickness ranging from 10 microns to 20 microns.

4. A bipolar battery comprising the bipolar electrode/separator assembly (100) of claim 1.

5. The bipolar battery of claim 4, wherein the bipolar electrode/separator assembly (100) comprises two or more bipolar electrode/separator assemblies (100) that are stacked such that electrode layers (113a, 113b) thereof having opposite polarities face each other.

6. The bipolar battery of claim 4, wherein an electrolyte of the bipolar battery is in a gel state.

7. A method of manufacturing a bipolar electrode/separator assembly (100), the method comprising:
a) preparing a bipolar electrode-adhesive film assembly (120) by
a1) applying a positive electrode active material and a negative electrode active material to central portions of top and bottom sides of a collector (111) so as to be spaced apart by a predetermined distance from edges of the collector (111), and performing drying thereupon, whereby a positive electrode (113a) and a negative electrode (113b) are respectively arranged on both surfaces of the collector (100), thereby forming a bipolar electrode (110);
a2) applying adhesive films (121), having no adhesiveness at room temperatures, on both the top and bottom surfaces of the collector (111) with respect to at least two sides, including opposing sides, among four uncoated edge surfaces of the collector (111) on which electrode layers (113a, 113b) are not coated in the bipolar electrode (110); and
b) stacking a separator (130) on one or both of the top and bottom surfaces of the bipolar electrode (110), said separator (130) being an unimpregnated non-electrolyte separator which has properties of being mechanically wetted by an electrolyte when impregnated therewith; and applying heat to thereby be adhesively sealed by the adhesive film (121), whereby the collector (111) and the separator (130) are integrated.

8. A method for making a bipolar battery, comprising the following steps:
a1) preparing two or more bipolar electrode/separator assemblies (100) by executing steps a1), a2) and b) of claim 7;
a2) stacking said two or more bipolar electrode/separator assemblies (100) such that electrode layers (113a, 113b) thereof having opposite polarities face each other to thereby form a stack (200) including said at least two bipolar electrode/separator assemblies (100); and
b) integrating the stack (200) through compression under heating;
c) inserting the integrated stack (200) into a battery package and injecting an electrolytic liquid to thereby impregnate the separator (130) with the electrolytic liquid.

9. The method of claim 8, wherein an electrolyte of the impregnated separator (130) of the bipolar battery is formed into a gel state by a thermal cross-linking reaction.

10. The bipolar electrode/separator assembly according to claim 1, wherein the adhesive films are applied to be spaced apart from the sides of the electrode layers by a predetermined distance.

## Patentansprüche

1. Bipolare Elektroden/Separator-Anordnung (100), umfassend:
a) eine bipolare Elektroden-Haftfolien-Anordnung (120), aufweisend
a1) eine bipolare Elektrode (110, 113a, 113b), die Aktivmaterialien, die fähig sind, unterschiedliche Polaritäten aufzuweisen, auf zentralen Abschnitten einer Oberseite bzw. einer Unterseite eines Kollektors (111) enthält, und
a2) Haftfolien (121) auf sowohl der Oberfläche als auch der Unterfläche des Kollektors (111) bezüglich zumindest zwei von vier unbeschichteten Randseiten des Kollektors (111), auf denen Elektrodenschichten (113a, 113b) in der bipolaren Elektrode nicht beschichtet sind; und
b) einen Separator (130), der auf einer oder beiden einer oberen und einer unteren Oberfläche der bipolaren Elektroden-Haftfolien-Anordnung (120) gestapelt ist, wobei der Separator (130) ein nicht imprägnierter Nicht-Elektrolyt-Separator ist, der Eigenschaften dahingehend aufweist, durch einen Elektrolyten mechanisch benetzt zu werden, wenn er mit diesem imprägniert wird; und
c) wobei der Kollektor (111) und der Separator (130) durch die Haftfolien (121) direkt zusammengefügt sind, um dadurch die bipolare Elektrode abzudichten.

2. Bipolare Elektroden/Separator-Anordnung (100) nach Anspruch 1, wobei die Haftfolien (121) eine Ethyl-Vinyl-Acetat (EVA)-Folie oder ein modifiziertes Polyethylen (PE)-Polymer aufweisen.

3. Bipolare Elektroden/Separator-Anordnung (100) nach Anspruch 1, wobei der Kollektor (111) eine Metallfolie mit einer Dicke von 10 Mikrometer bis 20 Mikrometer ist.

4. Bipolare Batterie, die die bipolare Elektroden/Separator-Anordnung (100) nach Anspruch 1 umfasst.

5. Bipolare Batterie nach Anspruch 4, wobei die bipolare Elektroden/Separator-Anordnung (100) zwei oder mehr bipolare- Elektroden/Separator-Anordnungen (100) umfasst, die so gestapelt sind, dass Elektrodenschichten (113a, 113b) davon entgegengesetzte Polaritäten aufweisen, die einander zugewandt sind.

6. Bipolare Batterie nach Anspruch 4, wobei ein Elektrolyt der bipolaren Batterie in einem Gelzustand ist.

7. Verfahren zum Herstellen einer bipolaren Elektroden/Separator-Anordnung (100), wobei das Verfahren umfasst:
a) Anfertigen einer bipolaren Elektroden-Haftfolien-Anordnung (120) durch
a1) Aufbringen eines Positive-Elektrode-Aktivmaterials und eines Negative-Elektrode-Aktivmaterials auf zentrale Abschnitte einer Oberseite und einer Unterseite eines Kollektors (111), sodass sie um einen vorbestimmten Abstand von Rändern des Kollektors (111) beabstandet sind, und daraufhin Durchführen eines Trocknens, wodurch eine positive Elektrode (113a) und eine negative Elektrode (113b) jeweils auf beiden Oberflächen des Kollektors (100) angeordnet werden, wodurch eine bipolare Elektrode (110) gebildet wird;
a2) Aufbringen von Haftfolien (121), die bei Raumtemperaturen kein Haftvermögen aufweisen, auf sowohl der oberen Oberfläche als auch der unteren Oberfläche des Kollektors (111) bezüglich zumindest zwei Seiten, die einander gegenüberliegende Seiten aufweisen, unter vier unbeschichteten Randoberflächen des Kollektors (111), auf denen Elektrodenschichten (113a, 113b) in der bipolaren Elektrode (110) nicht beschichtet sind; und
b) Stapeln eines Separators (130) auf eine oder beide der oberen und der unteren Oberfläche der bipolaren Elektrode (110), wobei der Separator (130) ein nicht imprägnierter Nicht-Elektrolyt-Separator ist, der Eigenschaften dahingehend aufweist, durch einen Elektrolyten mechanisch benetzt zu werden, wenn er mit diesem imprägniert wird; und Aufbringen von Wärme, um so durch die Haftfolie (121) haftend abgedichtet zu werden, wodurch der Kollektor (111) und der Separator (130) integriert werden.

8. Verfahren zum Fertigen einer bipolaren Batterie, das die folgenden Schritte umfasst:
a1) Anfertigen von zwei oder mehr bipolaren -Elektroden/Separator-Anordnungen (100) durch Ausführungen der Schritte a1), a2) und b) nach Anspruch 7;
a2) Stapeln der zwei oder mehr bipolaren Elektroden/Separator-Anordnungen (100) derart, dass Elektrodenschichten (113a, 113b) davon mit entgegengesetzte Polaritäten aufweisen, die einander zugewandt sind, um dadurch einen Stapel (200) zu bilden, der die zumindest zwei bipolaren Elektroden/Separator-Anordnungen (100) aufweist; und
b) Integrieren des Stapels (200) durch Druck unter Erwärmung;
c) Einsetzen des integrierten Stapels (200) in einen Batteriepack und Einspritzen einer elektrolytischen Flüssigkeit, um dadurch den Separator (130) mit der elektrolytischen Flüssigkeit zu imprägnieren.

9. Verfahren nach Anspruch 8, wobei ein Elektrolyt des imprägnierten Separators (130) der bipolaren Batterie durch eine thermische Vernetzungsreaktion in einen Gelzustand gebracht wird.

10. Bipolare-Elektrode-/Separator-Anordnung nach Anspruch 1, wobei die Haftfolien so aufgebracht sind, dass sie um einen vorbestimmten Abstand von den Seiten der Elektrodenschichten beabstandet sind.

## Revendications

1. Ensemble d'électrode bipolaire et de séparateur (100) comprenant :
a) un ensemble d'électrode bipolaire et de films adhésifs (120) comprenant
a1) une électrode bipolaire (110, 113a, 113b) contenant des matériaux actifs, capable d'avoir différentes polarités, sur des parties centrales de faces supérieure et inférieure d'un collecteur (111), respectivement, et
a2) des films adhésifs (121) à la fois sur les surfaces supérieure et inférieure du collecteur (111) par rapport à au moins deux de quatre côtés de bord non revêtus du collecteur (111) sur lesquels des couches d'électrodes (113a, 113b) ne sont pas revêtues dans l'électrode bipolaire ; et
b) un séparateur (130) empilé sur une ou les deux surfaces supérieure et inférieure de l'ensemble d'électrode bipolaire et de films adhésifs (120), ledit séparateur (130) étant un séparateur non électrolytique non imprégné qui a des propriétés d'être mouillé mécaniquement par un électrolyte lorsqu'il en est imprégné ; et
c) dans lequel le collecteur (111) et le séparateur (130) sont directement liés par les films adhésifs (121) pour ainsi étancher l'électrode bipolaire.

2. Ensemble d'électrode bipolaire et de séparateur (100) selon la revendication 1, dans lequel les films adhésifs (121) comprennent un film d'éthylacétate de vinyle (EVA) ou un polymère de polyéthylène (PE) modifié.

3. Ensemble d'électrode bipolaire et de séparateur (100) selon la revendication 1, dans lequel le collecteur (111) est un film métallique ayant une épaisseur allant de 10 microns à 20 microns.

4. Batterie bipolaire comprenant l'ensemble d'électrode bipolaire et de séparateur (100) selon la revendication 1.

5. Batterie bipolaire selon la revendication 4, dans laquelle l'ensemble d'électrode bipolaire et de séparateur (100) comprend deux ou plus d'ensembles d'électrodes bipolaires et de séparateurs (100) qui sont empilés de sorte que leurs couches d'électrodes (113a, 113b) aient des polarités opposées en regard l'une de l'autre.

6. Batterie bipolaire selon la revendication 4, dans laquelle un électrolyte de la batterie bipolaire se trouve à l'état de gel.

7. Procédé de fabrication d'un ensemble d'électrode bipolaire et de séparateur (100), le procédé comprenant :
a) la préparation d'un ensemble d'électrode bipolaire et de films adhésifs (120)
a1) par l'application d'un matériau actif d'électrode positive et un matériau actif d'électrode négative à des parties centrales de faces supérieure et inférieure d'un collecteur (111) de manière à être espacés d'une distance prédéterminée de bords du collecteur (111) et l'application d'un séchage à celles-ci, de sorte qu'une électrode positive (113a) et un électrode négative (113b) soient respectivement agencées sur les deux surfaces du collecteur (100) formant ainsi une électrode bipolaire (110) ;
a2) par l'application de films adhésifs (121), n'ayant aucune adhérence aux températures ambiantes, à la fois sur les surfaces supérieure et inférieure du collecteur (111) par rapport à au moins deux côtés, notamment des côtés opposés, parmi quatre surfaces de bord non revêtues du collecteur (111) sur lesquelles les couches d'électrode (113a, 113b) ne sont pas revêtues dans l'électrode bipolaire (110) ; et
b) l'empilement d'un séparateur (130) sur une ou les deux surfaces supérieure et inférieure de l'électrode bipolaire (110), ledit séparateur (130) étant un séparateur non électrolytique non imprégné qui a des propriétés d'être mouillé mécaniquement par un électrolyte lorsqu'il en est imprégné ; et l'application de chaleur pour être ainsi étanché au plan adhésif par le film adhésif (121), en sorte que le collecteur (111) et le séparateur (130) soient intégrés.

8. Procédé de fabrication d'une batterie bipolaire comprenant les étapes suivantes :
a1) la préparation de deux ou plus d'ensembles d'électrode bipolaire et de séparateur (100) en exécutant les étapes a1) et b) de la revendication 7 ;
a2) l'empilement desdits deux ou plusieurs d'ensembles d'électrode bipolaire et de séparateur (100) de sorte que leurs couches d'électrodes (113a, 113b) aient des polarités opposées en regard l'une de l'autre afin de former une pile (200) comprenant lesdits au moins deux ensembles d'électrode bipolaire et de séparateur (100) ; et
b) l'intégration de la pile (200) par compression sous l'action de la chaleur ;
c) l'insertion de la pile intégrée (200) a un paquet de batterie et l'injection d'un liquide électrolytique pour ainsi imprégner le séparateur (130) avec le liquide électrolytique.

9. Procédé selon la revendication 8, dans lequel un électrolyte du séparateur imprégné (130) de la batterie bipolaire est transformé à l'état de gel par une réaction de réticulation thermique.

10. Ensemble d'électrode bipolaire et de séparateur selon la revendication 1, dans lequel les films adhésifs sont appliqués pour être séparés des faces des couches d'électrodes d'une distance prédéterminée.
